# EUROPÄISCHE PATENTSCHRIFT

(11) **EP 3 345 299 B1**
(45) Veröffentlichungstag und Bekanntmachung des Hinweises auf die Patenterteilung: **13.01.2021**
(21) Anmeldenummer: 16759772.3
(22) Anmeldetag: 01.09.2016
(51) Int. Cl.: H02P 6/00, A47J 43/07

(54) **HANDGEHALTENES ELEKTRISCH ANGETRIEBENES HAUSHALTSGERÄT MIT GESCHWINDIGKEITSAUSWAHL**
ELECTRICALLY DRIVEN HAND-HELD DOMESTIC APPLIANCE WITH SPEED SELECTION
APPAREIL ÉLECTROMÉNAGER PORTATIF À VITESSE SÉLECTIONNABLE

(30) Priorität: 01.09.2015 DE 102015216677
(43) Veröffentlichungstag der Anmeldung: 11.07.2018
(73) Patentinhaber: De'Longhi Braun Household GmbH, 63263 Neu-Isenburg (DE)
(72) Erfinder: Schröder, Christian, 63456 Hanau (DE); KLEEMANN, Christof, 61350 Bad Homburg (DE); Buhl-Remmel,Sabine, 65824 Schwalbach am (DE); EISSENGARTHEN, Christoph, 55299 Nackenheim (DE)
(74) Vertreter: Hoffmann Eitle
(86) Internationale Anmeldenummer: PCT/EP2016/070591
(87) Internationale Veröffentlichungsnummer: WO 2017/037159

(56) Entgegenhaltungen:
- EP-A1- 0 723 333
- DE-A1- 19 742 916
- DE-A1-102008 040 934
- DE-A1-102008 040 935
- DE-A1-102010 040 497
- DE-U1- 20 180 402
- DE-U1- 29 719 596
- KR-A- 20100 000 963
- US-A- 5 347 205
- US-A1- 2013 214 716
- US-A1- 2014 226 436
- Bosch Hausgeräte: "Gebrauchsanleitung Bosch Stabmixer MSM5600/01 CHNR7 Deutsch (Seiten 1-3)", INTERNET , 31 May 2002 (2002-05-31), Retrieved from the Internet: URL:https://media3.bosch-home.com/Document s/9000194664_A.pdf [retrieved on 2019-11-28]

## Beschreibung

### Technisches Gebiet

Die vorliegende Erfindung betrifft ein handgehaltenes elektrisches Haushaltsgerät.

### Hintergrund der Erfindung

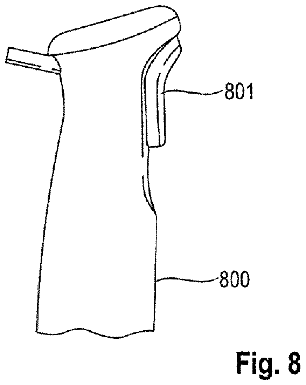

Handgehaltene elektrisch angetriebene Haushaltsgeräte, wie z.B. Stabmixer, finden heutzutage in vielen Haushalten und Küchen Einsatz. Ein derartiger Stabmixer, wie z.B. der in EP 2 571 037 A1 beschriebene Stabmixer, verfügt im Allgemeinen über einen Geschwindigkeitsschalter zum stufenlosen Regeln der Geschwindigkeit des Motors, der den Stabmixer antreibt. Mittels des Geschwindigkeitsschalters bzw. -reglers, im Folgenden allgemein als Betätigungselement bezeichnet, kann die Geschwindigkeit bzw. die Drehzahl des Motors vom vollständigen Stillstand bis zu einer maximalen Drehzahl des Motors geregelt werden. Die Regelung erfolgt entsprechend des Verfahrwegs bzw. Betätigungswegs, wie z.B. der Eindrücktiefe des Geschwindigkeitsschalters oder der auf den Geschwindigkeitsschalter ausgeübten Kraft, meist stufenlos. Ein Stabmixer des Stands der Technik ist abschnittsweise in Fig. 8 gezeigt, wobei das Bezugszeichen 801 den Geschwindigkeitsschalter des Stabmixers 800 darstellt.

Ein derartiges handgehaltenes elektrisch angetriebenes Haushaltsgerät, wie z.B. der Stabmixer des Stands der Technik, weist ein Problem auf, dass sich die Geschwindigkeit bei einer konstanten Position des Betätigungselement (z.B. einer konstanten Eindrücktiefe) durch eine Veränderung der Last durch das zu verarbeitende Gut (wie z.B. das zu zerkleinernde Lebensmittel) ändern kann, was zu einem ungünstigen Verarbeitungsergebnis führen kann. Eine derartige Laständeurng kann z.B. bei der Verarbeitung von pastösen, klebrigen und ballbildenden Lebensmitteln wie Teig, Honig, dicken Suppen sowie bei Food Processor Anwendungen mit ungleichmäßiger Lebensmittelzuführung (z.B. Scheiben schneiden, Raspeln, Entsaften, Wolfen) hervorgerufen werden, bei welchen ein benötigtes Anlaufdrehmoment sehr hoch ist und das benötigt Drehmoment nachfolgend stark abnimmt.

Wird ein zähes Lebensmittel wie Teig, Hönig oder dicke Suppen, verarbeitet, ist das Anlaufdrehmoment des Motors sehr hoch, sodass eine hohe Spannung eingestellt werden muss, um ein Anlaufen des Geräts zu ermöglichen. Das benötigte Drehmoment nimmt jedoch schlagartig ab, was zu einem starken Anstieg der Drehzahl führt, wenn der Betätigungsweg des zweiten Betätigungselements beibehalten wird. Im Falle von zähen Lebensmitteln ist es für den Benutzer nahezu unmöglich, den Betätigungsweg des zweiten Betätigungselements entsprechend schnell anzupassen, um eine konstante Drehzahl zu erhalten. Dies ist insbesondere nachteilhaft, wenn zur Verarbeitung des Lebensmittels eine niedrige Drehzahl benötigt wird, da die schlagartig ansteigende Drehzahl zu einem Überschreiten der optimalen Drehzahl führt und das Verarbeitungsergebnis verschlechtert wird.

Ein weiteres Problem konventioneller handgehaltener elektrisch angetriebener Haushaltsgeräte, wie z.B. Stabmixer, liegt darin, dass der Betätigungsweg (z.B. die Eindrücktiefe) des Geschwindigkeitsschalters relativ klein ist, aber dennoch ein großer Drehzahlbereich des Motors von null bis zur Maximalgeschwindigkeit ansteuerbar sein muss. Dies macht es für den Benutzer des Gerätes schwierig, eine bestimmte Geschwindigkeit anzuwählen und zu halten, welche der Benutzer präferiert oder welche für eine bestimmte Anwendung oder Verarbeitung ideal ist.

DE 10 2010 040 497 A1 offenbart ein Haushaltsgerät mit mindestens einem rotatorisch und/oder translatorisch bewegbarem Werkzeug und einem elektromotorischen Antrieb, wobei das Haushaltsgerät Mittel zur Erfassung des Belastungszustands des Werkzeugs sowie eine Steuereinrichtung aufweist, die zur Veränderung der Leistung des elektromotorischen Antriebs in Abhängigkeit vom gemessenen Belastungszustand geeignet ist.

DE 10 2008 040 934 A1 offenbart ein Küchengerät mit einem elektrischen Motor zum Antreiben eines Bearbeitungswerkzeugs, wobei das Küchengerät eine niederdrückbare erste Taste zum Betreiben des Motors bei einer ersten Drehzahl und eine niederdrückbare zweite Taste zum Betreiben des Motors bei einer zweiten Drehzahl umfasst. Durch die DE 10 2008 040 934 A1 wird ein mit mindestens zwei verschiedenen Drehzahlen betreibbares Küchengerät beschrieben.

Der Bosch-Stabmixer (https://media3.bosch-home.com/Documents/9000194664_A.pdf) ist ein Mixer mit stufenlos einstellbarer Drehzahl.

### Aufgabe der Erfindung

Somit ist es wünschenswert, ein verbessertes handgehaltenes elektrisch angetriebenes Haushaltsgerät bereitzustellen, das mindestens eines der obigen Probleme löst und zu einer verbesserten Ansteuerung bzw. Regelung des handgehaltenen elektrisch angetriebenen Haushaltsgeräts bzw. dessen Motors führt.

### Lösung der Aufgabe

Eine Lösung dieser Aufgabe wird durch das handgehaltene elektrisch angetriebene Haushaltsgerät und ein entsprechendes Verfahren mit den Merkmalen der unabhängigen Ansprüche bereitgestellt.

Dieses handgehaltenes elektrisch angetriebenes Haushaltsgerät, umfassend: einen elektrischen Motor zum Antreiben des Haushaltsgeräts; eine Steuereinheit zur Steuerung des Motors; ein erstes Betätigungselement zur Ausgabe, an die Steuereinheit, eines ersten Steuersignals; und eine Messeinrichtung zum Messen der Drehzahl des Motors, wobei die Steuereinheit eingerichtet ist, ein an den Motor auszugebende Motoransteuersignal basierend auf dem von dem ersten Betätigungselement empfangenen ersten Steuersignals und der durch die Messeinrichtung gemessenen Drehzahl des Motors zu bestimmen.

Dies ermöglicht eine Steuerung bzw. Regelung des Motors anhand der Drehzahl des Motors und eine Verhinderung von Schwankungen aufgrund der Veränderung der Last, welche z.B. durch eine Veränderung der Konsistenz des zu verarbeitenden Gutes bzw. Lebensmittels hervorgerufen wird.

Entsprechend kann das Verarbeitungsergebnis verbessert werden, da Schwankungen in der Drehzahl verhindert werden.

Gleichzeit wird eine genauere Ansteuerung des Motors durch den Benutzer ermöglicht, da ein bestimmtes Steuersignal bzw. ein bestimmter Wert des Steuersignals und somit ein bestimmter Betätigungsweg des ersten Betätigungselements mit einer bestimmten Drehzahl assoziiert ist, so dass eine bestimmte Drehzahl gezielt angesteuert werden kann.

Ein entsprechendes Verfahren zum Steuern eines handgehaltenen elektrisch angetriebenen Haushaltsgeräts umfasst die Schritte: Empfangen, von einem ersten Betätigungselement, eines ersten Steuersignals; Empfangen einer durch eine Messeinrichtung gemessenen Drehzahl des Motors, Bestimmen eines an den Motor auszugebenden Motoransteuersignals basierend auf dem von dem ersten Betätigungselement empfangenen ersten Steuersignal und der durch die Messeinrichtung gemessenen Drehzahl des Motors.

### Weiterbildung und Vorteile davon

Bevorzugt ist das von dem ersten Betätigungselement ausgegebene erste Steuersignal abhängig von einem Betätigungsweg des ersten Betätigungselements.

Dies ermöglicht die Ausgabe eines Signals entsprechend des Betätigungswegs und somit z.B. entsprechend der Eindrücktiefe oder der ausgeübten Kraft des ersten Betätigungselements. Der Betätigungsweg bzw. das zugehörige Signal kann einerseits kontinuierlich, stufenlos oder andererseits mehrstufig (bevorzugt mehr als zweistufig) ausgebildet sein.

Ferner bevorzugt ist die Steuereinheit eingerichtet, um eine Solldrehzahl entsprechend des ersten Steuersignals zu bestimmen und das an den Motor auszugebende Motoransteuersignal derart zu bestimmen, dass eine durch die Messeinrichtung gemessene Ist-Drehzahl mit der Soll-Drehzahl übereinstimmt.

Entsprechend wird im Verfahren bevorzugt im Schritt des Bestimmens eine Solldrehzahl entsprechend des ersten Steuersignals bestimmt und das an den Motor auszugebende Motoransteuersignal derart bestimmt, dass eine durch die Messeinrichtung gemessene Ist-Drehzahl mit der Soll-Drehzahl übereinstimmt.

Somit ist eine Regelung der Drehzahl anhand einer gewünschten Ist-Drehzahl und einer derzeitigen Soll-Drehzahl möglich.

Ferner bevorzugt ist die Messeinrichtung eingerichtet, um die Ist-Drehzahl kontinuierlich an die Steuereinheit auszugeben, und die Steuereinheit eingerichtet, kontinuierlich das an den Motor auszugebende Motoransteuersignal derart zu bestimmen, dass die durch die Messeinrichtung gemessene Ist-Drehzahl mit der Soll-Drehzahl übereinstimmt.

Entsprechend umfasst das Verfahren bevorzugt die Schritte des kontinuierlichen Ausgebens der Ist-Drehzahl an die Steuereinheit, und des kontinuierlichen Bestimmens des an den Motor auszugebenden Motoransteuersignals derart, dass die durch die Messeinrichtung gemessene Ist-Drehzahl mit der Soll-Drehzahl übereinstimmt.

Dies ermöglicht eine kontinuierliche Anpassung der Ist-Drehzahl an die gewünschte Soll-Drehzahl.

Ferner bevorzugt ist ein Zusammenhang zwischen dem ersten Steuersignal und einer Soll-Drehzahl eines von einem linearen Zusammenhang, einem exponentiellen Zusammenhang, einem stufenartigen Zusammenhang, einem beliebig kurvenförmigen Verlauf.

Durch die Wahl eines entsprechenden Zusammenhangs zwischen Steuersignal bzw. Steuersignalwert und Soll-Drehzahl lässt sich die Ansteuerung weiter verbessern, da z.B. eine Ansteuerung bestimmter für die Verarbeitung besonders relevanter Drehzahlen durch den Benutzer erleichtert wird.

Ferner bevorzugt umfasst das handgehaltene elektrisch angetriebene Haushaltsgerät ferner ein zweites Betätigungselement zur Ausgabe, an die Steuereinheit, eines zweiten Steuersignals zum Auswählen eines Motoransteuermodus, wobei die Steuereinheit eingerichtet ist, basierend auf dem zweiten Steuersignal einen Motoransteuermodus aus vorgegebenen Motoransteuermodi auszuwählen, und die Steuereinheit eingerichtet ist, das an den Motor auszugebende Motoransteuersignal ferner basierend auf dem ausgewählten Motoransteuermodus zu bestimmen.

Entsprechend umfasst das Verfahren bevorzugt ferner die Schritte: Empfangen, von einem zweiten Betätigungselement eines zweiten Steuersignals zum Auswählen eines Motoransteuermodus, Auswählen, basierend auf dem zweiten Steuersignal, eines Motoransteuermodus aus vorgegebenen Motoransteuermodi, wobei im Schritt des Bestimmens das an den Motor auszugebende Motoransteuersignal ferner basierend auf dem ausgewählten Motoransteuermodus bestimmt wird.

Entsprechend kann eine präzisere Ansteuerung bzw. Regelung mittels des ersten Betätigungselements durch Auswahl eines für die derzeitige Verarbeitung geeigneten Motoransteuermodus ermöglicht werden. Dies vereinfacht einerseits die Benutzung, da eine gewünschte Drehzahl leichter angesteuert werden kann und führt andererseits zu einem verbesserten Verarbeitungsergebnis durch die genauere Ansteuerung der für die Verarbeitung optimalen Drehzahl.

Ferner bevorzugt umfassen die vorgegebenen Motoransteuermodi zumindest einen von, einem ersten Motoransteuermodus mit einer ersten Maximaldrehzahl des elektrischen Motors, wobei die Steuereinheit eingerichtet ist, das an den Motor auszugebende Motoransteuersignal basierend auf dem ersten Steuersignal, der durch die Messeinrichtung gemessenen Drehzahl und der ersten Maximaldrehzahl zu bestimmen, einem zweiten Motoransteuermodus mit einer zweiten Maximaldrehzahl, verschieden von der ersten Maximaldrehzahl, wobei die Steuereinheit eingerichtet ist, das an den Motor auszugebende Motoransteuersignal basierend auf dem ersten Steuersignal, der durch die Messeinrichtung gemessenen Drehzahl und der zweiten Maximaldrehzahl zu bestimmen, einem ersten Pulsmodus mit einem ersten pulsförmigen Verlauf der Soll-Drehzahl zur Ansteuerung des elektrischen Motors, wobei die Steuereinheit eingerichtet ist das an den Motor auszugebende Motoransteuersignal basierend auf dem ersten Steuersignal, der durch die Messeinrichtung gemessenen Drehzahl und dem pulsförmigen Verlauf zu bestimmen.

Durch die Bereitstellung unterschiedlicher Motoransteuermodi wird die Ansteuerung und somit das Verarbeitungsergebnis weiter verbessert. Werden z.B. zwei Ansteuermodi mit unterschiedlichen Maximaldrehzahlen und somit einer unterschiedlichen Assoziation der Soll-Drehzahl zum ersten Steuersignal bereitgestellt, ermöglicht der Modus mit der geringeren Maximaldrehzahl eine genauere Ansteuerung von Drehzahlen im unteren Drehzahlbereich. Hingegen verbessert ein pulsförmiger Verlauf der Drehzahl die Verarbeitung anderer Lebensmittel (z.B. gleichmäßigeres Mahlbild) und ermöglicht eine weitere Verbesserung des Verarbeitungsergebnisses.

Ferner bevorzugt ist die Steuereinheit eingerichtet, im Pulsmodus die Pulsbreite in Abhängigkeit vom Betätigungsweg des zweiten Betätigungselements zu regeln, zwischen einem Auszustand und einer Ansteuerung mit einer Pulsform entsprechend der Betätigung des zweiten Betätigungselements zu schalten, die Amplitude in Abhängigkeit vom Betätigungsweg des zweiten Betätigungselements zu regeln, die Frequenz des Pulses in Abhängigkeit vom Betätigungsweg des zweiten Betätigungselements zu regeln, das Pulsverhältnis (On/Off) in Abhängigkeit vom Betätigungsweg des zweiten Betätigungselements zu regeln, oder eine Kombination hieraus entsprechend des Betätigungsweges zu regeln.

Durch die Ansteuerung eines geeigneten Parameters für die Verarbeitung kann das Verarbeitungsergebnis je nach zu verarbeitendem Lebensmittel weiter verbessert werden.

Ferner bevorzugt ist die Pulsform des Pulsmodus eines von einem Sägezahnpuls (ggf. mit verschiedenen Anstiegsraten, Steigungen), einem Sinuspuls, einem Rechteckpuls, einem Trapezpuls, oder einer beliebigen Pulsform.

Entsprechend des gewählten Lebensmittels oder des gewünschten Verarbeitungsergebnisses bieten die verschiedenen Pulsformen verbesserte Ergebnisse der Verarbeitung des Verarbeitungsguts.

### Kurze Beschreibung der Zeichnungen

In den Zeichnungen zeigt:
- Fig. 1:: das allgemeine Prinzip des erfindungsgemäßen handgehaltenen elektrisch angetriebenen Haushaltsgeräts;
- Fig. 2:: eine weitere Ausführungsform des erfindungsgemäßen handgehaltenen elektrisch angetriebenen Haushaltsgeräts;
- Fig. 3:: mögliche Verläufe der Ansteuerung für verschiedene Ansteuermodi;
- Fig. 4:: mögliche Verläufe der Ansteuerung für Pulsmodi;
- Fig. 5:: einen beispielhaften Zusammenhang des Betätigungswegs zur Pulsbreite in einem Ansteuermodus;
- Fig. 6:: einen Zusammenhang des Betätigungswegs zur Amplitude in einem Ansteuermodus;
- Fig. 7:: eine abschnittsweise Darstellung des erfinderischen Stabmixers;
- Fig. 8:: eine abschnittsweise Darstellung des Stabmixers des Standes der Technik;
- Fig. 9: eine Phasenanschnittschaltung für das erfindungsgemäße handgehaltene elektrisch angetriebene Haushaltsgerät.

### Grundprinzip der Erfindung

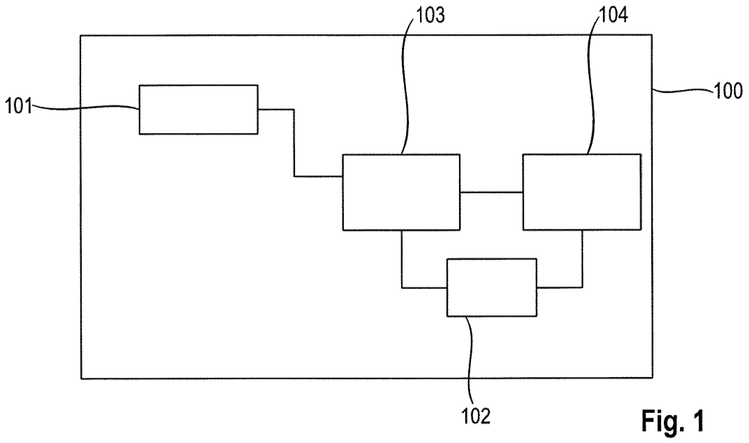

In Fig. 1 ist das Grundprinzip der Erfindung dargestellt. Anhand dieser Figur soll im Folgenden das Grundprinzip näher erläutert werden.

Ein handgehaltenes elektronisch angetriebenes Haushaltsgerät 100, wie z.B. ein Stabmixer, umfasst ein erstes Betätigungselement 101, eine Messeinrichtung 102 zum Messen der Drehzahl des Motors, eine Steuereinheit 103 sowie einen Motor 104.

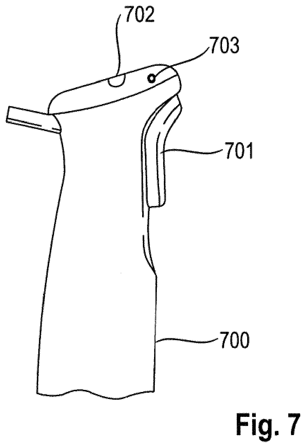

Das erste Betätigungselement 101, welches ein erstes Steuersignal ausgibt, kann z.B. als Taster ausgebildet sein, welcher ein Signal entsprechend des Betätigungswegs bzw. des Verfahrwegs des Tasters ausgibt. Der Betätigungsweg bzw. Verfahrweg kann hierbei z.B. die Eindrücktiefe des Tasters oder die auf den Taster ausgeübte Kraft sein. Ferner kann der Betätigungsweg auch z.B. die Neigung oder Winkelstellung des Betätigungselements oder auch der Verschiebeweg eines Sliderschalters sein. Ein derartiges Signal, welches abhängig von dem Betätigungsweg ist, kann kontinuierlich oder alternativ auch stufenweise ausgebildet sein, wobei eine derartige stufenweise Ausbildung bevorzugt mehr als zwei Stufen aufweist. Weiter bevorzugt kann der Betätigungsweg des Tasters kontinuierlich und alternativ auch stufenlos eingestellt werden, und ein dem Betätigungsweg entsprechendes Signal ausgegeben werden. Eine mögliche Ausgestaltung des ersten Betätigungselements 701 lässt sich der Fig. 7 entnehmen.

Die Messeinrichtung 102 ist derart ausgebildet, um die Drehzahl des Motors zu messen. Die Messung der Drehzahl des Motors umfasst hierbei auch die Messung der Drehzahl einer daran anschließenden Achse wie z.B. zur Verbindung der Klingen des Stabmixers mit dem Motor. Ein Messsignal der Messeinrichtung 102 wird in die Steuereinheit 103 eingegeben.

Die Steuereinheit 103 empfängt das Steuersignale des ersten Betätigungselements und das von der Messeinrichtung ausgegebene Messsignal, welches die gemessene Drehzahl abbildet, und verwendet diese zur Bestimmung eines an den Motor anzulegenden Motoransteuersignals.

Ein derartiges Motoransteuersignal kann hierbei eine an den Motor anzulegende Spannung definieren. Dem Fachmann sind jedoch verschiedene weitere Möglichkeiten der Ausbildung des Motoransteuersignals, wie z.B. als Steuersignal für eine Phasenanschnittsteuerung, Strom, Frequenz, Erregerfeldstärke, Feldfrequenz etc. bekannt.

Bevorzugt führt die Steuereinheit hierbei eine Steuerung bzw. Regelung der durch die Messeinrichtung (gemessenen) Ist-Drehzahl auf eine gewünschte (Soll-) Drehzahl durch, welche mittels des Betätigungswegs des ersten Betätigungselements definiert wird.

Die Steuereinheit 103 bestimmt hierbei zunächst die gewünschte Soll-Drehzahl basierend auf dem Betätigungsweg des ersten Betätigungselements. Die Bestimmung der Soll-Drehzahl kann hierbei mittels eines in der Steuereinheit definierten Zusammenhangs zwischen dem ersten Steuersignal (bzw. dessen Wert) und der Soll-Drehzahl erfolgen. Ein derartiger Zusammenhang kann linear ausgebildet sein. Alternativ ist auch ein exponentieller Zusammenhang, ein stufenartiger Zusammenhang, oder ein beliebiger kurvenförmiger Zusammenhang verwendbar.

Diese bestimmte Soll-Drehzahl wird nun mit der aktuellen Ist-Drehzahl verglichen, welche als Messsignal durch die Messeinrichtung 102 ausgegeben und von der Steuereinheit 103 empfangen wird.

Die Steuereinheit 103 nimmt eine entsprechende Regelung der auszugebenen Spannung vor, um die Ist-Drehzahl an die Soll-Drehzahl anzupassen. Entsprechend wird, bei einer zu geringen Ist-Drehzahl das an den Motor auszugebende Motoransteuersignal derart gewählt, dass sich die Motordrehzahl erhöht.

Beispielhaft kann die an den Motor anzulegende Spannung (als Motoransteuersignal) höher als die aktuell angelegte Spannung gewählt bzw. bestimmt und der Motor entsprechend angesteuert bzw. eine entsprechende Spannung an den Motor angelegt werden.

Mittels dieses Regelkreises findet bevorzugt eine konstante Überprüfung der Ist-Drehzahl mit der Soll-Drehzahl statt, um eine Anpassung der Ist-Drehzahl an die Soll-Drehzahl durch Anpassung des Motoransteuersignals durchzuführen.

Folglich wird bei einer Änderung der Drehzahl durch eine Änderung der Last an den Messern des Stabmixers, z.B. durch eine Zerkleinerung des zu zerkleinernden Gutes, eine Erhöhung der Drehzahl verhindert, da mittels des Regelkreises eine konstante Überprüfung der Ist-Drehzahl und einer Nachregelung des Motoransteuersignals, wie z.B. der angelegten Spannung, stattfindet.

Entsprechend wird die Ansteuerung bzw. Regelung des Motors und das dadurch erzielte Verarbeitungsergebnis verbessert und es wird eine konstante Motorgeschwindigkeit auch bei einer Änderung der Last erreicht.

### Weitere Ausführungsformen der Erfindung

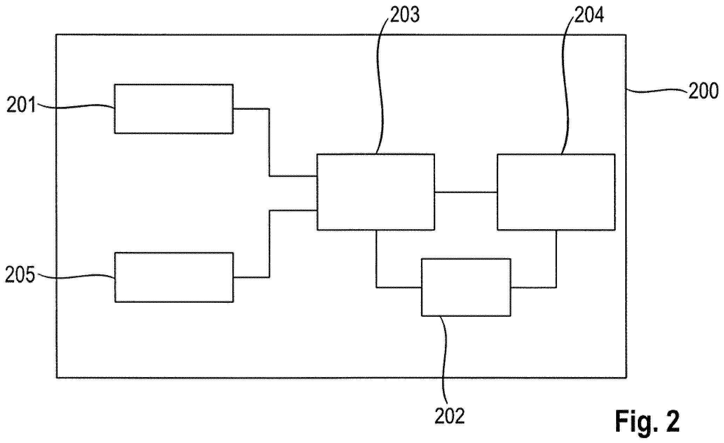

Eine zweite Ausführungsform der vorliegenden Erfindung soll nun im Folgenden mit Bezug auf Fig. 2 beschrieben werden. Entsprechend der ersten Ausführungsform umfasst das handgehaltene elektrisch angetriebene Haushaltsgerät 200 der zweiten Ausführungsform ein erstes Betätigungselement 201, eine Messeinrichtung 202 zum Messen der Drehzahl des Motors, eine Steuereinheit 203 sowie einen Motor 204. Die Ausführungsform der Fig. 2 unterscheidet sich von der Ausführungsform der Fig. 1 dadurch, dass sie ferner ein zweites Betätigungselement 205 aufweist. Das zweite Betätigungselement 205 dient der Ausgabe eines zweiten Steuersignals zum Auswählen eines Motoransteuermodus. Als derartiges zweites Steuerelement ist z.B. ein Taster, oder ein Schalter mit mehreren Positionen zur Auswahl mehrerer Modi verwendbar. Eine mögliche Ausgestaltung des zweiten Betätigungselements 702 lässt sich der Fig. 7 entnehmen. Ein Steuersignal in Form eines Ausgabesignals des zweiten Betätigungselements wird an die Steuereinheit 203 ausgegeben, welche eine entsprechende Steuerung bzw. Regelung, wie später beschrieben, durchführt.

Die Steuereinheit 203 empfängt die Steuersignale des ersten und zweiten Betätigungselements und verwendet diese zur Bestimmung eines an den Motor auszugebenden Motoransteuersignals. Hierzu wird in der Steuereinheit 203 mittels des durch das zweite Betätigungselement 205 ausgegebenen Steuersignals zuerst ein Motoransteuermodus aus einer Vielzahl von verschiedenen Motoransteuermodi ausgewählt. Eine derartige Auswahl kann z.B. einerseits durch mehrfaches Drücken des zweiten Betätigungselements 205 bis zum Erreichen des gewünschten Motoransteuermodus oder entsprechend der ausgewählten Position eines Schiebeschalters erfolgen.

Eine Ausgabe eines aktuell ausgewählten Modus an den Benutzer kann durch eine (in Fig. 1 nicht gezeigte) Anzeige z.B. in Form eines Displays, eines akustischen Signals oder einer oder mehrerer LEDs erfolgen. Eine mögliche Ausgestaltung als einzelne LED 703 lässt sich der Fig. 7 entnehmen. Der ausgewählte Modus lässt sich hier z.B. durch mehrfaches Blinken der LED entsprechend der Nummer des ausgewählten Modus oder auch unterschiedliche Farben darstellen.

Jeder Motoransteuermodus weist hierbei einen anderen Zusammenhang bzw. eine andere Abbildung bzw. Assoiation des ersten Steuersignals (bzw. dessen Werts) auf bzw. mit einer Drehzahl des Motors auf.

Diese Motoransteuermodi können sich hierbei beispielweise im Profilverlauf der Abbildung des ersten Steuersignals (bzw. dessen Werts) auf eine Soll-Drehzahl des Motors oder auch in einem anderen Minimalwert oder Maximalwert unterscheiden.

Wurde mittels des zweiten Betätigungselements ein entsprechender Motoransteuermodus aus einer Vielzahl von Motoransteuermodi ausgewählt, so wird anhand dieses Motoransteuermodus und des von dem ersten Betätigungselement empfangenen Steuersignals eine Bestimmung vorgenommen.

Hierbei wird mittels des über das erste Steuersignal angezeigten Betätigungswegs (bzw. Betätigungswegsposition) und des ausgewählten Motoransteuermodus, welcher einen Zusammenhang zwischen dem Betätigungsweg und einer Soll-Drehzahl herstellt, die zugehörige Soll-Drehzahl bestimmt.

Mittels der Soll-Drehzahl erfolgt, wie oben beschrieben, eine Bestimmung des Motoransteuersignals durch Vergleich mit dem derzeitigen Ist-Wert. Das entsprechend bestimmte Motoransteuersignal, wird dann an den Motor des handgehaltenen elektrisch angetriebenen Haushaltsgeräts bzw. an eine zur Regelung des Motors vorgesehene zwischengeschaltete Einheit ausgegeben.

Mögliche Ansteuermodi und deren Ausgestaltung werden im Folgenden genauer erläutert.

Mittels der Auswahl eines Ansteuermodus aus mehreren Ansteuermodi wird eine genaue und zuverlässige Steuerung bzw. Regelung der an den Motor anzulegenden Spannung oder der Drehzahl des Motors trotz eines geringen Betätigungswegs bzw. Verfahrwegs des zweiten Betätigungselements ermöglicht.

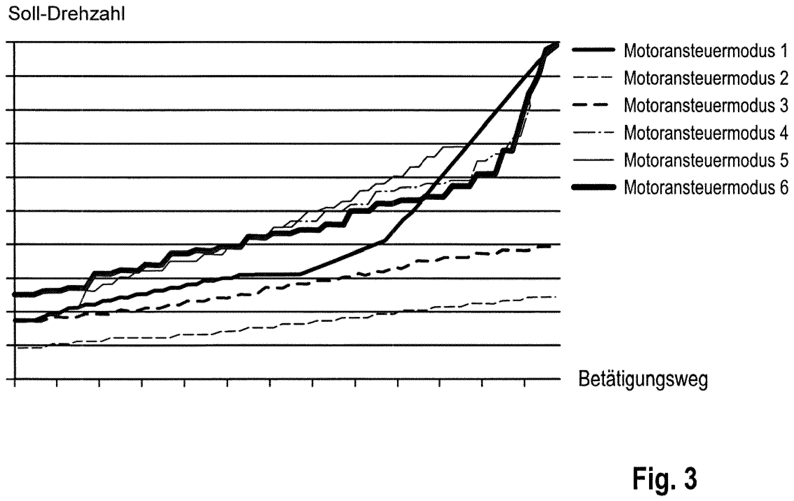

Fig. 3 zeigt beispielhaft verschiedene Verläufe möglicher Motoransteuermodi. Auf der X-Achse ist hierbei der Betätigungsweg aufgetragen. Auf der Y-Achse ist die Soll-Drehzahl aufgetragen. Beide Achsen sind einheitenlos dargestellt. Wie bereits erwähnt kann der Betätigungsweg auf der X-Achse hierbei z.B. die Eindrücktiefe oder die ausgeübte Kraft in einer geeigneten Einheit oder prozentual zu einem Maximalwert darstellen. Selbiges gilt für die auf der Y-Achse aufgetragenen Soll-Drehzahl. Auch diese kann in einer geeigneten Einheit oder prozentual zu einem Maximalwert aufgetragen sein.

Wie dem Diagramm der Fig. 3 beispielhaft zu entnehmen ist, unterscheiden sich die Motoransteuermodi z.B. in dem assoziierten Maximalwert der Soll-Drehzahl. Wie ferner erkennbar, können sich die verschiedenen Motoransteuermodi aber auch in ihrem Minimalwert der Soll-Drehzahl unterscheiden, wobei ein Motoransteuermodus einen Minimalwert aufweist, der verschieden ist von dem Minimalwert eines anderen Motoransteuermodus. Ferner kann der Verlauf des Zusammenhangs zwischen dem Betätigungsweg und einem zugehörigen Wert zwischen dem Minimalwert und dem Maximalwert und somit der Verlauf bzw. das Profil zwischen Minimalwert und Maximalwert zwischen den jeweiligen Motoransteuermodi unterschiedlich gestaltet sein. So ist der Verlauf des als Motoransteuermodus 2 gekennzeichneten Motoransteuermodus in Fig. 2 z.B. annähernd linear. Annährend linear kann hierbei in einer Ausgestaltung wie erkennbar auch eine stufenförmige Ausbildung umfassen, deren Näherung eine Gerade darstellt. Auch andere Profilverläufe, wie z.B. ein annähernd exponentieller Verlauf, wie stückweise im Motoransteuermodus 1, ist eine mögliche Ausgestaltung eines derartigen Profilverlaufs eines Motoransteuermodus. Auch Kombinationen zwischen linearen Verläufen und exponentiellen Verläufen oder ähnliches, wie als Motoransteuermodus 1 dargestellt, können ausgebildet werden.

Es ergeben sich somit je nach Profilverlauf verschiedene Zuordnungen bzw. Assoziationen des ersten Steuersignals bzw. dessen Werte mit den möglichen Ansteuerwerten.

Weitere mögliche Motoransteuermodi in Form von einem oder mehreren (unterschiedlich ausgebildeten) Pulsmodi sollen nun mit Bezug auf Fig. 3 beschrieben werden.

In einem derartigen Motoransteuermodus wird der Motor durch die Steuereinheit derart angesteuert, dass die Drehzahl einen pulsförmigen Verlauf aufweist.

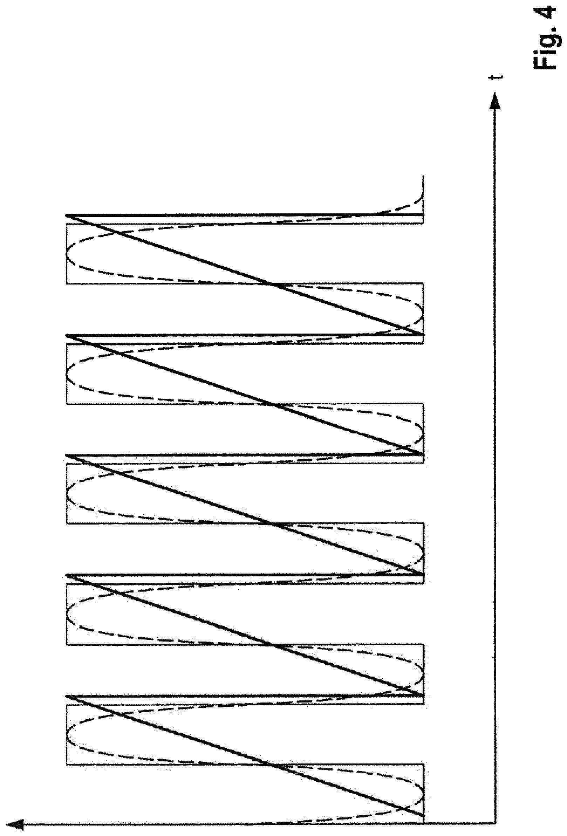

Wie beispielhaft der Fig. 4 zu entnehmen ist, kann ein derartiger Verlauf der Soll-Drehzahl ein Rechteckverlauf bzw. -form (Rechteckpuls), ein Sägezahnverlauf (Sägezahnpuls) (mit verschiedenen Anstiegsraten, Steigungen), ein Sinusverlauf (Sinuspuls), ein Trapezverlauf (Trapezpuls), oder eine beliebige andere Pulsform sein. Entsprechend ändert sich z.B. bei der Verwendung eines Rechteckverlaufs bzw. einer Rechteckform die Soll-Drehzahl zyklisch zwischen einer ersten Soll-Drehzahl und einer zweiten Soll-Drehzahl.

Mittels der oben beschriebenen Regelung wird die gemessene Ist-Drehzahl entsprechend durch das an den Motor ausgegebene Motoransteuersignal auf die jeweilige Soll-Drehzahl geregelt.

Somit ändert sich auch die Ist-Drehzahl entsprechend.

Die Verwendung einer derartigen Pulsform ist vorteilhaft für die Verarbeitung bestimmter Verarbeitungsgüter. So ist die Verwendung einer Pulsform z.B. bei pastösen, klebrigen und ballbildenden Lebensmitteln vorteilhaft, um ein gleichmäßiges Verarbeitungsergebnis zu erzielen.

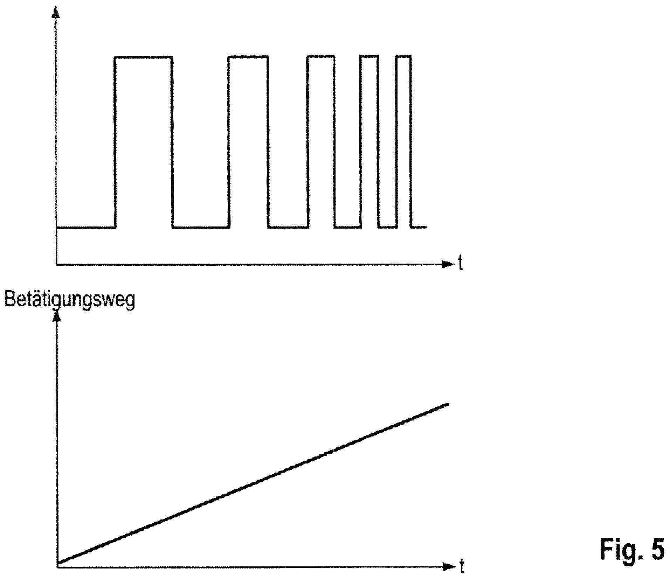

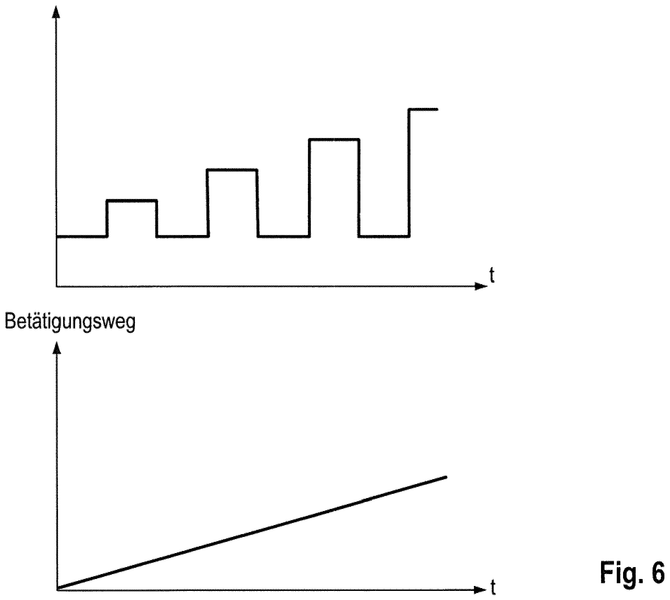

Mögliche Steuerungsverfahren eines oder mehrerer Pulsmodi sollen nun mit Hinblick auf Fig. 5 und 6 beschrieben werden.

Bei einer Ausgestaltung kann bei Auswahl eines Pulsmodus (ggf. aus mehreren möglichen Pulsmodi) durch Betätigung des ersten Betätigungselements ein Ein- oder Ausschalten des Motors erfolgen. Somit dient das erste Betätigungselement lediglich dem Ein- und Ausschalten des Motors, wobei die Parameter des Pulsmodus wie Amplitude, Frequenz und Ähnliches unabhängig vom Betätigungsweg des ersten Betätigungselements sind.

In einem weiteren Beispiel kann über den Betätigungsweg des ersten Betätigungselements die Frequenz oder die Pulsbreite des Pulses gesteuert werden. Wie der Fig. 5 zu entnehmen ist, wird entsprechend bei einem Erhöhen des Betätigungswegs bzw. dessen Werts die Pulsbreite verringert oder die Frequenz des Pulses erhöht. Somit ändert sich die (Soll- und Ist-) Drehzahl des Motors mit zunehmender Geschwindigkeit von einem ersten Wert zu einem zweiten Wert und umgekehrt.

Dies ermöglicht dem Benutzer ein Einstellen der Zerkleinerungsgeschwindigkeit über das erste Betätigungselement mit lediglich einem Betätigungselement bei gleichzeitigem Erhalt des Pulsmodus.

In einem weiteren Beispiel kann, wie in Fig. 6 gezeigt, das erste Betätigungselement verwendet werden, um die Amplitude zu steuern. In Fig. 6 ist beispielhaft ein Pulsmodus gezeigt, bei welchem durch Erhöhen des Betätigungswegs bzw. dessen Werts die obere Drehzahl erhöht wird. Jedoch ist dieses Steuerungsverfahren nicht hierauf beschränkt und es kann die Amplitude auch durch eine Anpassung der oberen und unteren Drehzahl des Pulses geändert werden.

Für den Fachmann ist ersichtlich, dass sich die Ausbildung der Pulsmodi nicht auf die Änderung der Ampltitude, der Pulsbreite oder der Frequenz beschränkt, sondern auch eine Steuerung/Regelung eines On/Off Tastverhältnisses und eine beliebige Kombination aus den genannten Steuerungen in Abhängigkeit des ersten Steuersignals möglich ist.

In den vorliegenden Ausführungsformen wurde die Steuereinheit derart beschrieben, dass sie ein Motoransteuersignal bestimmt und ausgibt.

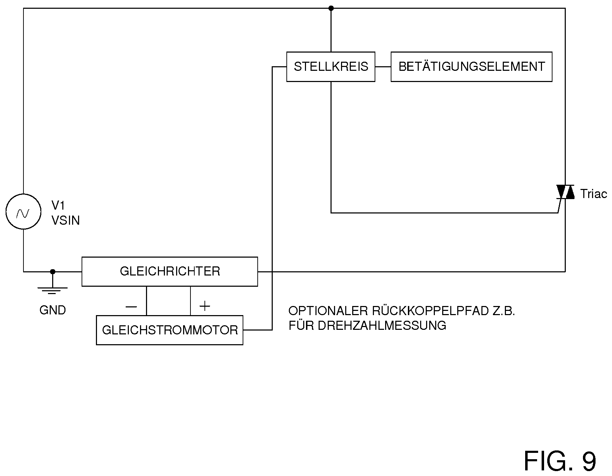

In einer weiteren bevorzugten Ausführungsform ist der oben beschriebene Motor 104, 204 ein Gleichstrommotor mit Fremderregung oder Permanentmagneten (im Unterschied zu einem 3 phasigen Wechselstrommotor). Die oben erläuterte Pulsform des Pulsprograms, z.B. rechteckförmige Pulsform, bewirkt einen kurzzeitigen auch mechanischen Stillstand des Motors. Der Gleichstrommotor kann durch eine Phasenanschnittschaltung gemäß Fig. 9 angesteuert werden, an der ein Gleichrichter (hier z.B. ein Brückengleichrichter) der Wechselstromversorgung V1 nachgestellt ist. Gemäß der in Fig. 9 dargestellten Schaltung ist der Gleichstrommotor mit nur einem Stellkreis (digital oder analog), nur einem Betätigungselement, und nur einem Triac elektrisch verbunden, wodurch sich der Schaltungsaufwand im Vergleich zu 3-phasigen Motoren erheblich verringert. Bei dem Betätigungselement gemäß Fig. 9 kann es sich beispielsweise um ein Potentiometer handeln, mit dem der Stellkreis und damit beispielsweise die Drehzahl des Gleichstrommotors einstellbar ist. Gemäß Fig. 9 kann dadurch ferner ein optionaler Rückkopplungspfad über den Stellkreis und das Betätigungselement ausgebildet werden, so dass eine Drehzahlmessung und Drehzahlregelung am Gleichstrommotor bereitgestellt werden kann.

Die Ausgabe eines Motoransteuersignals an den Motor umfasst hierbei auch die Ausgabe eines geeigneten Steuersignals an weitere zwischenliegende Komponenten, wie z.B. eine Schalteinrichtung wie einen Triac, Mosfet, IGBT oder Transistor, welche der Ausgabe der notwendigen Leistung oder Spannung an den Motor dient.

Dem Fachmann sind somit verschiedenste Möglichkeiten der Ausbildung des Motoransteuersignal bekannt, wie z.B. als Steuersignal oder auch als an den Motor anzulegende Spannung.

Wie für den Fachmann weiter ersichtlich, können die Steuersignale der ersten und der zweiten Betätigungseinrichtung entweder analoge oder digitale Signale sein, welche durch die Steuereinheit verarbeitet werden.

Dem Fachmann sind verschiedene Arten der Ausgestaltung der ersten Betätigungseinrichtung bekannt, welche ein analoges oder digitales Signal entsprechend einem Betätigungsweg bzw. einer Position entlang eines Betätigungsweges, einer Eindrücktiefe eines Tasters, eines Schiebewegs eines Schiebeschalters oder einer Druckkraft auf das Betätigungselement ausgibt.

Die Steuereinheit kann z.B. als Mikrocontroller ausgebildet sein.

Auch eine beliebige Kombination der in den Ansprüchen genannten und einleitend diskutierten Merkmale ist umfasst. Das handgehaltene elektrisch angetriebene Haushaltsgerät ist nicht auf den genannten Stabmixer beschränkt, sondern kann auch z.B. andere handgehaltene Küchengeräte, wie z.B. ein Handrührgerät, umfassen.

Der Fachmann erkennt auch sofort, dass viele verschiedene Kombinationen von Hardware, Software und Firmware zur Ausführung der vorliegenden Erfindung verwendet werden können, insbesondere zur Realisierung der Funktion der Steuereinheit.

### Gewerbliche Anwendbarkeit

Das handgehaltene elektrische angetriebene Haushaltsgerät, wie z.B. ein Stabmixer, kann zur Verarbeitung von Lebensmitteln eingesetzt werden.

## Patentansprüche

1. Handgehaltener elektrisch angetriebener Stabmixer (100, 200), umfassend:
einen elektrischen Motor (104, 204) zum Antreiben des Stabmixers;
eine Steuereinheit (103, 203) zur Steuerung des Motors;
ein erstes Betätigungselement (101, 201) zur Ausgabe, an die Steuereinheit (103, 203), eines ersten Steuersignals; und
eine Messeinrichtung (102, 202) zum Messen der Drehzahl des Motors (104, 204), **gekennzeichnet dadurch, daß** die Steuereinheit (103, 203), so eingerichtet ist, ein an den Motor (104, 204) auszugebendes Motoransteuersignal basierend auf dem von dem ersten Betätigungselement (101, 201) empfangenen ersten Steuersignal und der durch die Messeinrichtung (102, 202) gemessenen Drehzahl des Motors (104, 204) zu bestimmen, und
das erste Betätigungselement (101, 201), so ausgebildet ist, daß das von ihm ausgegebene erste Steuersignal abhängig ist von einem Betätigungsweg des ersten Betätigungselements.

2. Handgehaltener elektrisch angetriebener Stabmixer (100, 200) nach Anspruch 1, wobei
die Steuereinheit (103, 203) eingerichtet ist, um eine Soll-Drehzahl entsprechend des ersten Steuersignals zu bestimmen und das an den Motor (104, 204) auszugebende Motoransteuersignal derart zu bestimmen, dass eine durch die Messeinrichtung (102, 202) gemessene Ist-Drehzahl mit der Soll-Drehzahl übereinstimmt.

3. Handgehaltener elektrisch angetriebener Stabmixer (100, 200) nach Anspruch 2, wobei
die Messeinrichtung (102, 202) eingerichtet ist, um die Ist-Drehzahl kontinuierlich an die Steuereinheit (103, 203) auszugeben, und
die Steuereinheit (103, 203) eingerichtet ist, kontinuierlich das an den Motor (104, 204) auszugebende Motoransteuersignal derart zu bestimmen, dass die durch die Messeinrichtung (102, 202) gemessene Ist-Drehzahl mit der Soll-Drehzahl übereinstimmt.

4. Handgehaltener elektrisch angetriebener Stabmixer (100, 200) nach einem der vorangegangenen Ansprüche, wobei ein Zusammenhang zwischen dem ersten Steuersignal und einer Solldrehzahl eines ist von:
- einem linearen Zusammenhang;
- einem exponentiellen Zusammenhang;
- einem stufenartigen Zusammenhang;
- einem beliebig kurvenförmigen Verlauf.

5. Handgehaltener elektrisch angetriebener Stabmixer (200) nach einem der vorangegangenen Ansprüche, ferner umfassend:
ein zweites Betätigungselement (205) zur Ausgabe, an die Steuereinheit (203), eines zweiten Steuersignals zum Auswählen eines Motoransteuermodus, wobei die Steuereinheit (203) eingerichtet ist, basierend auf dem zweiten Steuersignal einen Motoransteuermodus aus vorgegebenen Motoransteuermodi auszuwählen, und
die Steuereinheit (203) eingerichtet ist, das an den Motor (204) auszugebende Motoransteuersignal ferner basierend auf dem ausgewählten Motoransteuermodus zu bestimmen.

6. Handgehaltener elektrisch angetriebener Stabmixer (200) nach Anspruch 5, wobei
die vorgegebenen Motoransteuermodi zumindest eines umfassen von:
- einem ersten Motoransteuermodus mit einer ersten Maximaldrehzahl des elektrischen Motors (204), wobei die Steuereinheit (203) eingerichtet ist, das an den Motor auszugebende Motoransteuersignal basierend auf dem ersten Steuersignal, der durch die Messeinrichtung (202) gemessenen Drehzahl und der ersten Maximaldrehzahl zu bestimmen;
- einem zweiten Motoransteuermodus mit einer zweiten Maximaldrehzahl, verschieden von der ersten Maximaldrehzahl, wobei die Steuereinheit (203) eingerichtet ist, das an den Motor (204) auszugebende Motoransteuersignal basierend auf dem ersten Steuersignal, der durch die Messeinrichtung (202) gemessenen Drehzahl und der zweiten Maximaldrehzahl zu bestimmen;
- einem ersten Pulsmodus mit einem ersten Pulsförmigen Verlauf der Soll-Drehzahl zur Ansteuerung des elektrischen Motors, wobei die Steuereinheit (203) eingerichtet ist, das an den Motor (204) auszugebende Motoransteuersignal basierend auf dem ersten Steuersignal, der durch die Messeinrichtung (202) gemessenen Drehzahl und dem pulsförmigen Verlauf zu bestimmen.

7. Handgehaltener elektrisch angetriebener Stabmixer (200) nach Anspruch 6, wobei
die Steuereinheit (203) eingerichtet ist, im Pulsmodus
- die Pulsbreite in Abhängigkeit vom Betätigungsweg des zweiten Betätigungselements (205) zu regeln;
- zwischen einem Auszustand und einer Ansteuerung mit einer Pulsform entsprechend der Betätigung des zweiten Betätigungselements (205) zu schalten;
- die Amplitude in Abhängigkeit vom Betätigungsweg des zweiten Betätigungselements (205) zu regeln;
- die Frequenz des Pulses in Abhängigkeit vom Betätigungsweg des zweiten Betätigungselements (205) zu regeln;
- das Pulsverhältnisses, On/Off), in Abhängigkeit vom Betätigungsweg des zweiten Betätigungselements (205) zu regeln; oder
- eine Kombination hieraus entsprechend des Betätigungsweges zu regeln.

8. Handgehaltener elektrisch angetriebener Stabmixer (200) nach einem der Ansprüche 6 oder 7, wobei die Pulsform des Pulsmodus eines ist von:
- einem Sägezahnpuls
- einem Sinuspuls;
- einem Rechteckpuls;
- einem Trapezpuls;
- einer beliebigen Pulsform.

9. Verfahren zum Steuern eines handgehaltenen elektrisch angetriebenen Stabmixers (100, 200), die Schritte umfassend:
Empfangen, von einem ersten Betätigungselement (101, 201), eines ersten Steuersignals;
Empfangen einer durch eine Messeinrichtung (102, 202) gemessenen Drehzahl eines Motors (104, 204), **gekennzeichnet dadurch, daß** das von dem ersten Betätigungselement (101, 201) ausgegebene erste Steuersignal von einem Betätigungsweg des ersten Betätigungselements abhängig gemacht wird, und weiterhin **gekennzeichnet durch**
Bestimmen eines an den Motor (104, 204) auszugebenden Motoransteuersignals basierend auf dem von dem ersten Betätigungselement (101, 201) empfangenen ersten Steuersignal und der **durch** die Messeinrichtung (102, 202) gemessenen Drehzahl des Motors.

10. Verfahren nach Anspruch 9, wobei
im Schritt des Bestimmens eine Soll-Drehzahl entsprechend des ersten Steuersignals bestimmt wird und das an den Motor (104, 204) auszugebende Motoransteuersignal derart bestimmt wird, dass eine durch die Messeinrichtung (102, 202) gemessene Ist-Drehzahl mit der Soll-Drehzahl übereinstimmt.

11. Verfahren nach Anspruch 10, wobei
die Ist-Drehzahl kontinuierlich an die Steuereinheit (103, 203) ausgegeben wird, und
das an den Motor (104, 204) auszugebende Motoransteuersignal kontinuierlich derart bestimmt wird, dass die durch die Messeinrichtung (102, 202) gemessene Ist-Drehzahl mit der Soll-Drehzahl übereinstimmt.

12. Verfahren nach einem der Ansprüche 9 bis 11, wobei
ein Zusammenhang zwischen dem ersten Steuersignal und einer Solldrehzahl eines ist von:
- einem linearen Zusammenhang;
- einem exponentiellen Zusammenhang;
- einem stufenartigen Zusammenhang;
- einem beliebig kurvenförmigen Verlauf.

13. Verfahren nach einem der Ansprüche 9 bis 12, ferner die Schritte umfassend:
Empfangen, von einem zweiten Betätigungselement (205) eines zweiten Steuersignals zum Auswählen eines Motoransteuermodus,
Auswählen, basierend auf dem zweiten Steuersignal, eines Motoransteuermodus aus vorgegebenen Motoransteuermodi, wobei
im Schritt des Bestimmens, das an den Motor (204) auszugebende Motoransteuersignal ferner basierend auf dem ausgewählten Motoransteuermodus bestimmt wird.

14. Verfahren nach Anspruch 13, wobei
die vorgegebenen Motoransteuermodi zumindest eines umfassen von:
- einem ersten Motoransteuermodus mit einer ersten Maximaldrehzahl des elektrischen Motors (204), wobei die Steuereinheit (203) eingerichtet ist, das an den Motor auszugebende Motoransteuersignal basierend auf dem ersten Steuersignal, der durch die Messeinrichtung (202) gemessenen Drehzahl und der ersten Maximaldrehzahl zu bestimmen;
- einem zweiten Motoransteuermodus mit einer zweiten Maximaldrehzahl, verschieden von der ersten Maximaldrehzahl, wobei die Steuereinheit (203) eingerichtet ist, das an den Motor (204) auszugebende Motoransteuersignal basierend auf dem ersten Steuersignal, der durch die Messeinrichtung (205) gemessenen Drehzahl und der zweiten Maximaldrehzahl zu bestimmen;
- einem ersten Pulsmodus mit einem ersten Pulsförmigen Verlauf der Soll-Drehzahl zur Ansteuerung des elektrischen Motors (204), wobei die Steuereinheit (203) eingerichtet ist, das an den Motor auszugebende Motoransteuersignal basierend auf dem ersten Steuersignal, der durch die Messeinrichtung (202) gemessenen Drehzahl und dem pulsförmigen Verlauf zu bestimmen.

15. Verfahren nach Anspruch 14, wobei
im Pulsmodus
- die Pulsbreite in Abhängigkeit vom Betätigungsweg des zweiten Betätigungselements (205) geregelt wird;
- zwischen einem Auszustand und einer Ansteuerung mit einer Pulsform entsprechend der Betätigung des zweiten Betätigungselements (205) geschaltet wird;
- die Amplitude in Abhängigkeit vom Betätigungsweg des zweiten Betätigungselements (205) geregelt wird;
- die Frequenz des Pulses in Abhängigkeit vom Betätigungsweg des zweiten Betätigungselements (205) geregelt wird;
- das Pulsverhältnis (On/Off) in Abhängigkeit vom Betätigungsweg des zweiten Betätigungselements (205) geregelt wird; oder
- eine Kombination hieraus entsprechend des Betätigungsweges geregelt wird.

16. Verfahren nach einem der Ansprüche 14 oder 15, wobei die Pulsform des Pulsmodus eines ist von:
- einem Sägezahnpuls
- einem Sinuspuls;
- einem Rechteckpuls;
- einem Trapezpuls;
- einer beliebigen Pulsform.

## Claims

1. Hand-held electrically driven hand blender (100, 200), comprising:
an electrical motor (104, 204) for driving the hand blender;
a control unit (103, 203) for controlling the motor;
a first operating element (101, 201) for outputting to the control unit (103, 203) a first control signal; and
a measuring device (102, 202) for measuring the rotational speed of the motor (104, 204), **characterised in that** the control unit (103, 203) is configured to determine a motor actuating signal to be output to the motor (104, 204) based on the first control signal received from the first operating element (101, 201) and the rotational speed of the motor (104, 204) measured by the measuring device (102, 202), and
the first operating element (101, 201) is configured such that the first control signal output by same is dependent on an operating travel of the first operating element.

2. Hand-held electrically driven hand blender (100, 200) according to claim 1, wherein
the control unit (103, 203) is configured to determine an intended rotational speed corresponding to the first control signal and to determine the motor actuating signal to be output to the motor (104, 204) such that an actual rotational speed measured by the measuring device (102, 202) corresponds to the intended rotational speed.

3. Hand-held electrically driven hand blender (100, 200) according to claim 2, wherein
the measuring device (102, 202) is configured to output the actual rotational speed continuously to the control unit (103, 203), and
the control unit (103, 203) is configured to continuously determine the motor actuating signal to be output to the motor (104, 204) such that the actual rotational speed measured by the measuring device (102, 202) corresponds to the intended rotational speed.

4. Hand-held electrically driven hand blender (100, 200) according to one of the preceding claims, wherein
a relationship between the first control signal and an intended rotational speed is one of:
- a linear relationship;
- an exponential relationship;
- a step-like relationship;
- any curve-formed progression.

5. Hand-held electrically driven hand blender (200) according to one of the preceding claims, further comprising:
a second operating element (205) for outputting to the control unit (203) a second control signal in order to select a motor actuating mode, wherein
the control unit (203) is configured to select a motor actuating mode from specified motor actuating modes based on the second control signal, and
the control unit (203) is configured to determine the motor actuating signal to be output to the motor (204) further based on the selected motor actuating mode.

6. Hand-held electrically driven hand blender (200) according to claim 5, wherein
the specified motor actuating modes comprises at least one of:
- a first motor actuating mode with a first maximum rotational speed of the electrical motor (204), wherein the control unit (203) is configured to determine the motor actuating signal to be output to the motor based on the first control signal, the rotational speed measured by the measuring device (202) and the first maximum rotational speed;
- a second motor actuating mode with a second maximum rotational speed, different from the first maximum rotational speed, wherein the control unit (203) is configured to determine the motor actuating signal to be output to the motor (204) based on the first control signal, the rotational speed measured by the measuring device (202) and the second maximum rotational speed;
- a first pulse mode with a first pulse-formed progression of the intended rotational speed for actuating the electrical motor, wherein the control unit (203) is configured to determine the motor actuating signal to be output to the motor (204) based on the first control signal, the rotational speed measured by the measuring device (202) and the pulse-formed progression.

7. Hand-held electrically driven hand blender (200) according to claim 6, wherein
the control unit (203) is configured, in the pulse mode, to
- regulate the pulse width depending on the operating travel of the second operating element (205);
- switch between an "off" state and an actuation with a pulse form corresponding to the operation of the second operating element (205);
- regulate the amplitude depending on the operating travel of the second operating element (205);
- regulate the frequency of the pulse depending on the operating travel of the second operating element (205);
- regulate the on/off pulse ratio depending on the operating travel of the second operating element (205); or
- regulate a combination thereof according to the operating travel.

8. Hand-held electrically driven hand blender (200) according to one of the claims 6 or 7, wherein
the pulse form of the pulse mode is one of:
- a sawtooth pulse
- a sine pulse;
- a rectangular pulse;
- a trapezoidal pulse;
- any pulse form.

9. Method for controlling a hand-held electrically driven hand blender (100, 200), the steps comprising:
receiving a first control signal from a first operating element (101, 201);
receiving a measured rotational speed of a motor (104, 204) measured by a measuring device (102, 202), **characterised in that** the first control signal output by the first operating element (101, 201) is made dependent on an operating travel of the first operating element, and further **characterised by** determining a motor actuating signal to be output to the motor (104, 204) based on the first control signal received from the first operating element (101, 201) and the rotational speed of the motor measured by the measuring device (102, 202).

10. Method according to claim 9, wherein
in the determining step, an intended rotational speed corresponding to the first control signal is determined and the motor actuating signal to be output to the motor (104, 204) is determined such that an actual rotational speed measured by the measuring device (102, 202) corresponds to the intended rotational speed.

11. Method according to claim 10, wherein
the actual rotational speed is output continuously to the control unit (103, 203), and
the motor actuating signal to be output to the motor (104, 204) is continuously determined such that the actual rotational speed measured by the measuring device (102, 202) corresponds to the intended rotational speed.

12. Method according to one of the claims 9 to 11,
wherein
a relationship between the first control signal and an intended rotational speed is one of:
- a linear relationship;
- an exponential relationship;
- a step-like relationship;
- any curve-formed progression.

13. Method according to one of the claims 9 to 12, further comprising the steps:
receiving from a second operating element (205) a second control signal in order to select a motor actuating mode,
selecting a motor actuating mode from specified motor actuating modes, based on the second control signal, wherein
in the determining step, the motor actuating signal to be output to the motor (204) is further determined based on the selected motor actuating mode.

14. Method according to claim 13, wherein
the specified motor actuating modes comprise at least one of:
- a first motor actuating mode with a first maximum rotational speed of the electrical motor (204), wherein the control unit (203) is configured to determine the motor actuating signal to be output to the motor based on the first control signal, the rotational speed measured by the measuring device (202) and the first maximum rotational speed;
- a second motor actuating mode with a second maximum rotational speed, different from the first maximum rotational speed, wherein the control unit (203) is configured to determine the motor actuating signal to be output to the motor (204) based on the first control signal, the rotational speed measured by the measuring device (205) and the second maximum rotational speed;
- a first pulse mode with a first pulse-formed progression of the intended rotational speed for actuating the electrical motor (204), wherein the control unit (203) is configured to determine the motor actuating signal to be output to the motor based on the first control signal, the rotational speed measured by the measuring device (202) and the pulse-formed progression.

15. Method according to claim 14, wherein
in the pulse mode
- the pulse width is regulated depending on the operating travel of the second operating element (205);
- switching between an "off" state and an actuation with a pulse form corresponding to the operation of the second operating element (205) takes place;
- the amplitude is regulated depending on the operating travel of the second operating element (205);
- the frequency of the pulse is regulated depending on the operating travel of the second operating element (205) ;
- the on/off pulse ratio is regulated depending on the operating travel of the second operating element (205); or
- a combination thereof is regulated according to the operating travel.

16. Method according to one of the claims 14 or 15, wherein
the pulse form of the pulse mode is one of:
- a sawtooth pulse
- a sine pulse;
- a rectangular pulse;
- a trapezoidal pulse;
- any pulse form.

## Revendications

1. Mixeur plongeant portatif à entraînement électrique (100, 200) comprenant :
un moteur électrique (104, 204) pour entraîner le mixeur plongeant ;
une unité de commande (103, 203) pour la commande du moteur ;
un premier élément d'actionnement (101, 201) pour émettre un premier signal de commande à l'unité de commande (103, 203) ; et
un dispositif de mesure (102, 202) pour mesurer le régime du moteur (104, 204), **caractérisé en ce que** l'unité de commande (103, 203) est configurée de façon à déterminer un signal de commande de moteur à délivrer au moteur (104, 204) sur la base du premier signal de commande reçu du premier actionneur (101, 201) et du régime du moteur (104, 204) mesuré par le dispositif de mesure (102, 202), et le premier élément d'actionnement (101, 201) est configuré de sorte que le premier signal de commande délivré par celui-ci dépend d'une course d'actionnement du premier élément d'actionnement.

2. Mixeur plongeant portatif à entraînement électrique (100, 200) selon la revendication 1, dans lequel
l'unité de commande (103, 203) est configurée pour déterminer un régime de consigne correspondant au premier signal de commande et pour déterminer le signal de commande de moteur à délivrer au moteur (104, 204) de sorte qu'un régime réel mesuré par le dispositif de mesure (102, 202) correspond au régime de consigne.

3. Mixeur plongeant portatif à entraînement électrique (100, 200) selon la revendication 2, dans lequel
le dispositif de mesure (102, 202) est configuré pour délivrer en continu le régime réel à l'unité de commande (103, 203), et
l'unité de commande (103, 203) est configurée pour déterminer en continu le signal de commande de moteur à délivrer au moteur (104, 204) de sorte que le régime réel mesuré par le dispositif de mesure (102, 202) correspond au régime de consigne.

4. Mixeur plongeant portatif à entraînement électrique (100, 200) selon l'une quelconque des revendications précédentes, dans lequel
un rapport entre le premier signal de commande et un régime de consigne est l'un :
- d'un rapport linéaire ;
- d'un rapport exponentiel ;
- d'un rapport échelonné ;
- d'un tracé curvilinéaire arbitraire.

5. Mixeur plongeant portatif à entraînement électrique (200) selon l'une quelconque des revendications précédentes, comprenant en outre :
un second élément d'actionnement (205) pour délivrer, à l'unité de commande (203), un second signal de commande pour sélectionner un mode de commande de moteur, dans lequel
l'unité de commande (203) est configurée pour sélectionner un mode de commande de moteur parmi des modes de commande de moteur prédéterminés sur la base du second signal de commande, et
l'unité de commande (203) est configurée pour déterminer en outre le signal de commande de moteur à délivrer au moteur (204) sur la base du mode de commande de moteur sélectionné.

6. Mixeur plongeant portatif à entraînement électrique (200) selon la revendication 5, dans lequel
les modes de commande de moteur prédéterminés comprennent au moins l'un parmi:
- un premier mode de commande de moteur avec un premier régime maximal du moteur électrique (204), dans lequel l'unité de commande (203) est configurée pour déterminer le signal de commande de moteur à délivrer au moteur sur la base du premier signal de commande, du régime mesuré par le dispositif de mesure (202) et du premier régime maximal ;
- un second mode de commande de moteur avec un second régime maximal, différent du premier régime maximal, dans lequel l'unité de commande (203) est configurée pour déterminer le signal de commande de moteur à délivrer au moteur (204) sur la base du premier signal de commande, du régime mesuré par le dispositif de mesure (202) et du second régime maximal ;
- un premier mode d'impulsion avec un tracé en forme d'impulsion du régime de consigne pour l'entraînement du moteur électrique, dans lequel l'unité de commande (203) est configurée pour déterminer le signal de commande de moteur à délivrer au moteur (204) sur la base du premier signal de commande, du régime mesuré par le dispositif de mesure (202) et du tracé en forme d'impulsion.

7. Mixeur plongeant portatif à entraînement électrique (200) selon la revendication 6, dans lequel
l'unité de commande (203) est configurée, dans le mode impulsion,
- pour réguler la largeur d'impulsion en fonction de la course d'actionnement du second élément d'actionnement (205) ;
- pour commuter entre un état d'arrêt et une commande avec une forme d'impulsion correspondant à l'actionnement du second élément d'actionnement (205) ;
- pour réguler l'amplitude en fonction de la course d'actionnement du second élément d'actionnement (205) ;
- pour réguler la fréquence de l'impulsion en fonction de la course d'actionnement du second élément d'actionnement (205) ;
- pour réguler le rapport d'impulsion, (on/off), en fonction de la course d'actionnement du second élément d'actionnement (205) ; ou
- pour réguler une combinaison de ceux-ci correspondant à la course d'actionnement.

8. Mixeur plongeant portatif à entraînement électrique (200) selon l'une quelconque des revendications 6 ou 7, dans lequel
la forme d'impulsion du mode d'impulsion est l'une parmi :
- une impulsion en dents de scie d'une impulsion sinusoïdale ;
- une impulsion carrée ;
- une impulsion trapézoïdale ;
- une forme d'impulsion arbitraire.

9. Procédé de commande d'un mixeur plongeant portatif à entraînement électrique (100, 200), comprenant les étapes consistant à :
recevoir, d'un premier élément d'actionnement (101, 201), un premier signal de commande ;
recevoir un régime d'un moteur (104, 204) mesuré par un dispositif de mesure (102, 202), **caractérisé en ce que** le premier signal de commande délivré par le premier élément d'actionnement (101, 201) est rendu dépendant d'une course d'actionnement du premier élément d'actionnement, et **caractérisé en outre par** la détermination d'un signal de commande de moteur à délivrer au moteur (104, 204) sur la base du premier signal de commande reçu du premier élément d'actionnement (101, 201) et du régime du moteur mesuré par le dispositif de mesure (102, 202).

10. Procédé selon la revendication 9, dans lequel
à l'étape de détermination, un régime de consigne correspondant au premier signal de commande est déterminé et le signal de commande de moteur à délivrer au moteur (104, 204) est déterminé de sorte qu'un régime réel mesuré par le dispositif de mesure (102, 202) correspond au régime de consigne.

11. Procédé selon la revendication 10, dans lequel
le régime réel est transmis en continu à l'unité de commande (103, 203), et
le signal de commande de moteur à délivrer au moteur (104, 204) est déterminé en continu de sorte que le régime réel mesuré par le dispositif de mesure (102, 202) correspond au régime de consigne.

12. Procédé selon l'une quelconque des revendications 9 à 11, dans lequel un rapport entre le premier signal de commande et un régime de consigne est l'un :
- d'un rapport linéaire ;
- d'un rapport exponentiel ;
- d'un rapport échelonné ;
- d'un tracé curvilinéaire arbitraire.

13. Procédé selon l'une quelconque des revendications 9 à 12, comprenant en outre les étapes consistant à :
recevoir, d'un second élément d'actionnement (205), un second signal de commande pour sélectionner un mode de commande de moteur,
sélectionner, sur la base du second signal de commande, un mode de commande de moteur parmi des modes de commande de moteur prédéterminés, dans lequel
à l'étape de détermination, le signal de commande de moteur à délivrer au moteur (204) est en outre déterminé sur la base du mode de commande de moteur sélectionné.

14. Procédé selon la revendication 13, dans lequel
les modes de commande de moteur prédéterminés comprennent au moins l'un parmi :
- un premier mode de commande de moteur avec un premier régime maximal du moteur électrique (204), dans lequel l'unité de commande (203) est configurée pour déterminer le signal de commande de moteur à délivrer au moteur sur la base du premier signal de commande, du régime mesuré par le dispositif de mesure (202) et du premier régime maximal ;
- un second mode de commande de moteur avec un second régime maximal, différent du premier régime maximal, dans lequel l'unité de commande (203) est configurée pour déterminer le signal de commande de moteur à délivrer au moteur (204) sur la base du premier signal de commande, du régime mesuré par le dispositif de mesure (205) et du second régime maximal ;
- un premier mode d'impulsion avec un tracé en forme d'impulsion du régime de consigne pour l'entraînement du moteur électrique (204), dans lequel l'unité de commande (203) est configurée pour déterminer le signal de commande de moteur à délivrer au moteur sur la base du premier signal de commande, du régime mesuré par le dispositif de mesure (202) et du tracé en forme d'impulsion.

15. Procédé selon la revendication 14, dans lequel
dans le mode d'impulsion
- la largeur d'impulsion est régulée en fonction de la course d'actionnement du second élément d'actionnement (205) ;
- une commutation est réalisée entre un état d'arrêt et une commande avec une forme d'impulsion correspondant à l'actionnement du second élément d'actionnement (205) ;
- l'amplitude est régulée en fonction de la course d'actionnement du second élément d'actionnement (205) ;
- la fréquence de l'impulsion est régulée en fonction de la course d'actionnement du second élément d'actionnement (205) ;
- le rapport d'impulsion (on/off) est régulé en fonction de la course d'actionnement du second élément d'actionnement (205) ; ou
- une combinaison de ceux-ci est régulée correspondant à la course d'actionnement.

16. Procédé selon l'une quelconque des revendications 14 ou 15, dans lequel la forme d'impulsion du mode d'impulsion est l'un :
- d'une impulsion en dents de scie d'une impulsion sinusoïdale ;
- d'une impulsion carrée ;
- d'une impulsion trapézoïdale ;
- d'une forme d'impulsion arbitraire.
